# EUROPEAN PATENT APPLICATION

(11) **EP 4 610 156 A1**
(43) Date of publication of application: **03.09.2025**
(21) Application number: 25159311.7
(22) Date of filing: 21.02.2025
(51) Int. Cl.: B62K 5/10, B60G 17/005, B62K 5/027

(54) **RUNNING UNIT**

(30) Priority: 21.02.2024 JP 2024024757
(71) Applicant: Tsubakimoto Chain Co., Osaka 530-0005 (JP)
(72) Inventor: NAKAGOSHIKI, Keita, Osaka, 530-0005 (JP)
(74) Representative: dompatent von Kreisler Selting Werner - Partnerschaft von Patent- und Rechtsanwälten mbB

(57) **Abstract**

To provide a simply structured running unit that can suppress the production costs and maintenance frequency and offer high flexibility in equipment design. The running unit includes wheels attached to left and right pivot arms pivotable about a pivot shaft, and first and second pivot rotating elements that rotate in conjunction with one of the pivot arms and the other of the pivot arms, respectively. The first and second pivot rotating elements and first and second elongated transmission elements transmit rotation respectively to first and second transmission elements. A linking shaft connects the first and second transmission elements. The first and second pivot rotating elements are linked to rotate in opposite directions to each other. The running unit further includes a rotation suppression mechanism configured to suppress the rotation of the linking shaft.

## Description

### BACKGROUND OF THE INVENTION

### 1. Field of the Invention

The present invention relates to a running unit that includes a main body, a pivot motion transmission connected to the main body, a pair of left and right pivot arms provided to the pivot motion transmission so as to be pivotable about a pivot shaft, and wheels provided to the pivot arms respectively.

### 2. Description of the Related Art

A running unit having a main body, a pair of left and right pivot arms provided pivotably about a pivot shaft, and wheels provided to the pivot arms respectively has been known, for example, from Japanese Patent No. 4567813.

The running unit of a multi-wheel vehicle 1 described in Japanese Patent No. 4567813 includes a main body (frame 2), a pair of left and right pivot arms (swing arms 4L and 4R) provided pivotably about a pivot shaft (support shaft part 3A) relative to the main body (frame 2), and wheels (5L and 5R) provided to the pivot arms (swing arms 4L and 4R) respectively. The pivot shaft (support shaft part 3A) is provided with substantially fan-shaped tilting members 17L and 17R, the arcuate portions 21 of which are each connected, by a string member 20, to a direction-changing member 19 configured in the form of a balance or a pulley.

The tilting members 17L and 17R are thus linked to operate, so that, when one of the wheels (5L and 5R) is pushed up by a force from a road surface via the pivot shaft (support shaft part 3A) and pivot arm (4L, 4R), the other one of the wheels (5L and 5R) can be pushed down toward the road surface. When the vehicle makes a turn or changes directions, or when running on a laterally inclined road surface, the wheels (5L and 5R) can be tilted flexibly together with the vehicle body, while the ground pressure of the wheels (5L and 5R) is maintained uniform.

### SUMMARY OF THE INVENTION

The running unit known from, for example, Japanese Patent No. 4567813 mentioned above still has some scope of improvement.

Namely, the running unit according to, for example, Japanese Patent No. 4567813 is configured to link the pair of left and right wheels to operate via the direction-changing member, tilting members, and string member. The pivot arms are always allowed to pivot and pivoting movements thereof are always linked and can never be stopped.

Since the pivoting movements cannot be stopped, the pivoting movements may destabilize the vehicle body in the rolling direction when the vehicle is moving at low speeds, such as when starting.

The same applies when the vehicle comes to a halt, i.e., the continuous pivoting movements and the linkage of the left and right wheels to operate may unbalance the vehicle body or prevent it from standing on its own.

The present invention solves these problems, and an object thereof is to provide a simply structured running unit switchable between a pivoting state and a locking state of wheels, for higher running stability.

The above object is achieved by a running unit according to the present invention, which includes: a main body; a pivot motion transmission connected to the main body; a pair of left and right pivot arms provided to the pivot motion transmission so as to be pivotable about a pivot shaft; and wheels provided to the pivot arms respectively. The pivot motion transmission includes a first pivot rotating element that rotates with a pivoting movement of one of the pivot arms, a second pivot rotating element that rotates in conjunction with a pivoting movement of an other one of the pivot arms, a first transmission element that transmits rotation via the first pivot rotating element and a first elongated transmission element, and a second transmission element that transmits rotation via the second pivot rotating element and a second elongated transmission element. The first transmission element and the second transmission element have respectively rotating shafts connected together by a linking shaft. The first pivot rotating element and the second pivot rotating element are linked to be able to rotate in opposite directions to each other. The running unit includes a rotation suppression mechanism that suppresses the rotation of the linking shaft.

According to the invention set forth in claim 1 and claim 9, the pivot motion transmission includes a first pivot rotating element that rotates with a pivoting movement of one pivot arm, a second pivot rotating element that rotates with a pivoting movement of the other pivot arm, a first transmission element that transmits rotation via the first pivot rotating element and a first elongated transmission element, and a second transmission element that transmits rotation via the second pivot rotating element and a second elongated transmission element. The first transmission element and the second transmission element have respectively rotating shafts connected together by a linking shaft. The first pivot rotating element and the second pivot rotating element are linked to be able to rotate in opposite directions to each other. When one of the wheels swings up, for example, due to road surface conditions, the pivoting movement of the pivot arm on that wheel causes the other pivot arm to swing down through the pivot motion transmission, causing the other wheel to swing down.

Conversely, when the other wheel swings up, the first wheel can swing down cooperatively through the pivot motion transmission.

Thus the pivot motion transmission allows the pair of left and right wheels to change their height in accordance with the tilt in the left and right direction of the vehicle body, or the irregularities or slope of the road surface, so that the left and right wheels both reliably stay on the ground, which improves the running stability.

The running unit further includes a rotation suppression mechanism that suppresses the rotation of the linking shaft. The linking shaft can therefore be switched freely between a rotatable state and a non-rotatable state.

When the linking shaft is in the non-rotatable state, for example, the other wheel is prevented from swinging via the linking shaft.

When the vehicle is running at low speeds, for example, when starting, the left and right wheels can be prevented from swinging to reduce instability and ensure the stability of the vehicle body. On the other hand, once the vehicle stabilizes at higher speeds, wheel movement coordination can be resumed. In this way, the coordination between the left and right wheels can be adjusted according to the running state or road surface conditions.

The pivot shafts, the linking shaft, and the rotation suppression mechanism arranged in close proximity to each other allow for compact configurations for moving the left and right wheels cooperatively in their swinging directions and for suppressing the wheel coordination, and help improve the layout flexibility of the running unit.

According to the configuration set forth in claim 2, the rotation suppression mechanism includes a rotation transmission limiter that is coaxial with, and configured to rotate integrally with the linking shaft, and a rotation transmission controller configured to control rotation of the rotation transmission limiter. The rotation transmission limiter and the rotation transmission controller are configured to be able to lock with each other. The linking shaft can be reliably prevented from rotating, which improves vehicle stability at low speeds and allows the vehicle to stand on its own when stopped.

According to the configuration set forth in claim 3, the rotation transmission limiter includes on an outer circumferential surface thereof a recessed portion, and the rotation transmission controller includes a lever having a protruded portion configured to be able to move into the recessed portion. The linking shaft can be locked by a simple and lightweight configuration in its vicinity.

A clutch gear, as a rotating element having a recessed portion on the outer circumferential surface, can be formed in a fan shape, consisting only of the part where the protruded portion of the lever goes in. This way, the weight as well as the storage space of the rotation suppression mechanism can be reduced.

Using a lever as the rotation transmission controller enables transmission of power necessary for the locking from various directions relative to the linking shaft. Thus the layout flexibility of the running unit can be increased.

According to the configuration set forth in claim 4, the rotation transmission limiter includes on an outer circumferential surface thereof a hole, and the rotation transmission controller includes a pin configured to be able to move into the hole. The linking shaft can be locked by a simple and lightweight configuration in its vicinity.

The rotating element having a hole on the outer circumferential surface can be formed in a fan shape, consisting only of the part where the pin goes in. This way, the weight as well as the storage space of the rotation suppression mechanism can be reduced.

According to the configuration set forth in claim 5, the rotation transmission controller includes a solenoid unit and a biasing member. This way, the locking between the rotation transmission limiter and the rotation transmission controller can be electrically controlled.

According to the configuration set forth in claim 6, the first elongated transmission element includes a chain having ends, one end of the ends being connected to the first pivot rotating element and another end of the ends being connected to the first transmission element. The second elongated transmission element includes a chain having ends, one end of the ends being connected to the second pivot rotating element and another end of the ends being connected to the second transmission element. The first transmission element, first pivot rotating element, second transmission element, and second pivot rotating element may be sprockets, so that they can reliably transmit rotation. The sprockets can each be formed in a fan shape covering the range where the open-ended chain engages. This way, the weight as well as the storage space of the pivot motion transmission can be reduced.

According to the configuration set forth in claim 7, the pivot motion transmission includes a third pivot rotating element axially adjacent to the first pivot rotating element and rotating integrally therewith, a fourth pivot rotating element axially adjacent to the second pivot rotating element and rotating integrally therewith, a third transmission element that transmits rotation via the third pivot rotating element and a third elongated transmission element, and a fourth transmission rotary member that transmits rotation via the fourth pivoting rotary member and a fourth elongated transmission element. The third transmission element and the fourth transmission element are connected together by a linking shaft. The third elongated transmission element is configured to transmit rotation by tension in an opposite direction to the tension applied by the first elongated transmission element, and the fourth elongated transmission element is configured to transmit rotation by tension in an opposite direction to the tension applied by the second elongated transmission element. The elongated transmission elements are unlikely to slacken no matter which way each pivot arm moves. For example, even when the main body is picked up so that both wheels are lifted up from the ground, both pivot arms move cooperatively in opposite directions rather than swinging down together.

According to the configuration set forth in claim 8, the third elongated transmission element includes a chain having ends, one end of the ends being connected to the third pivot rotating element and another end of the ends being connected to the third transmission element. The fourth elongated transmission element includes a chain with ends, one end being connected to the fourth pivot rotating element and the other end being connected to the fourth transmission element. The third transmission element, third pivot rotating element, fourth transmission element, and fourth pivot rotating element may be sprockets, so that they can reliably transmit rotation. The sprockets can each be formed in a fan shape covering the range where the open-ended chain engages. This way, the weight as well as the storage space of the pivot motion transmission can be reduced.

### BRIEF DESCRIPTION OF THE DRAWINGS

FIG. 1 is a perspective view of a running unit 100 according to a first embodiment of the present invention;
FIG. 2 is a top view of the running unit 100 according to the first embodiment of the present invention;
FIG. 3 is a front view of the running unit 100 according to the first embodiment of the present invention;
FIG. 4 is a perspective view of the running unit 100 according to the first embodiment of the present invention seen from below;
FIG. 5 is an enlarged illustrative view from behind of a pivot motion transmission 120 of the running unit 100 according to the first embodiment of the present invention;
FIG. 6 is an enlarged illustrative view from the front of the pivot motion transmission 120 of the running unit 100 according to the first embodiment of the present invention;
FIG. 7 is a perspective view showing a cross section of a rotation suppression mechanism 140 of the running unit 100 according to the first embodiment of the present invention;
FIG. 8 is a cross-sectional view of the rotation suppression mechanism 140 of the running unit 100 according to the first embodiment of the present invention;
FIG. 9 is an enlarged illustrative view from the front of a pivot motion transmission 120b of a running unit 100b according to a second embodiment of the present invention;
FIG. 10 is a perspective view showing a cross section of a rotation suppression mechanism 140b of the running unit 100b according to the second embodiment of the present invention;
FIG. 11 is a cross-sectional view of the rotation suppression mechanism 140b of the running unit 100b according to the second embodiment of the present invention;
FIG. 12 is a diagram explaining the operation of the present invention viewed from behind;
FIG. 13 is an illustrative view of the present invention seen from the first wheel 113L side when the first wheel 113L swings up;
FIG. 14 is an illustrative view of the present invention seen from the second wheel 113R side when the first wheel 113L swings up; and
FIG. 15 is an enlarged illustrative view of a pivot motion transmission 120c of a running unit 100c according to a third embodiment of the present invention.

### DESCRIPTION OF THE PREFERRED EMBODIMENTS

A running unit 100 according to a first embodiment of the present invention will be hereinafter described with reference to the drawings.

The drawings do not illustrate the components of a running vehicle that includes the running unit 100, so that the main body 110 is depicted as separate left and right parts. In actuality, the left and right parts of the main body 110 are coupled together by other components not shown here so that the main body 110 is in one piece and the pivot shafts 111 (first pivot shaft 111R and second pivot shaft 111L) and the linking shaft 125 are at fixed positions relative to each other.

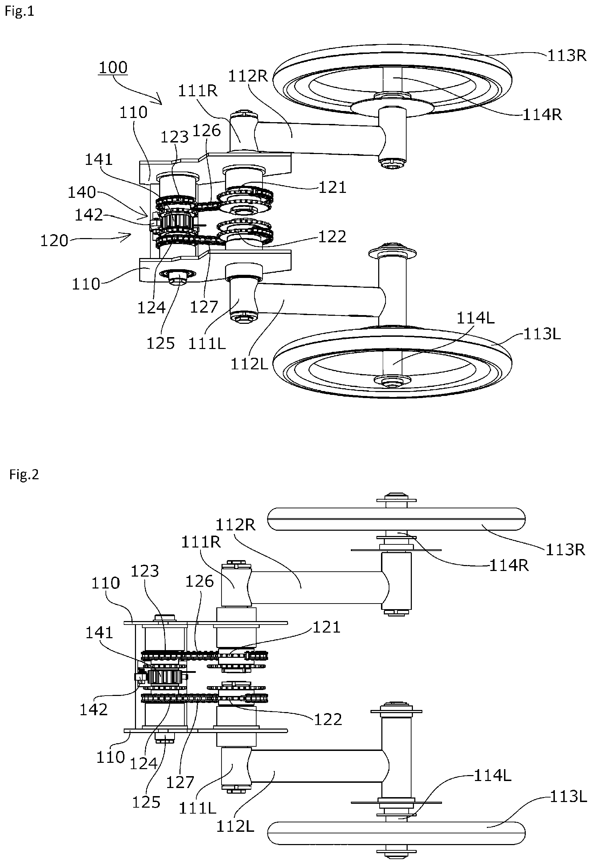

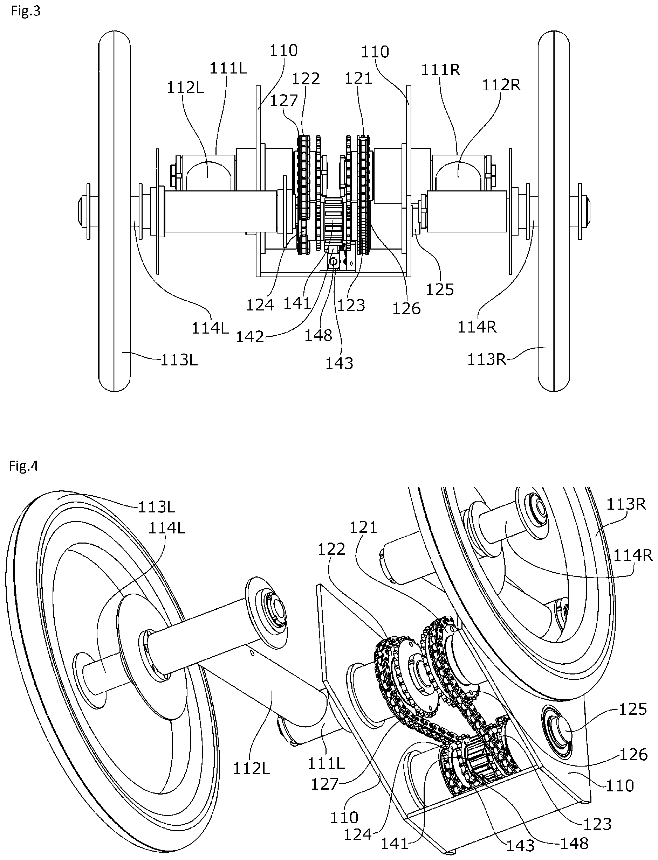

The running unit 100 according to the first embodiment of the present invention includes, as shown in FIG. 1 to FIG. 4, a main body 110, a pivot motion transmission 120 connected to the main body 110, a pair of left and right pivot arms 112 (first pivot arm 112R and second pivot arm 112L) provided to the pivot motion transmission 120 such as to be pivotable about pivot shafts 111 (first pivot shaft 111R and second pivot shaft 111L), wheels 113 (first wheel 113R and second wheel 113L) connected to the respective pivot arms 112 such as to be rotatable about rotating shafts 114 (first rotating shaft 114R and second rotating shaft 114L), and a rotation suppression mechanism 140.

The pivot motion transmission 120 includes a first pivot sprocket 121 that is a first pivot rotating element connected to the first pivot arm 112R via the first pivot shaft 111R, a second pivot sprocket 122 that is a second pivot rotating element connected to the second pivot arm 112L via the second pivot shaft 111L, a first transmission sprocket 123 that is a first transmission element for transmitting rotation via the first pivot-coupled sprocket 121 and a first chain 126 that is a first elongated transmission element, and a second transmission sprocket 124 that is a second transmission element for transmitting rotation via the second pivot sprocket 122 and a second chain 127 that is a second elongated transmission element.

The first transmission sprocket 123 and second transmission sprocket 124 are connected by a linking shaft 125 that couples together their rotating shafts.

The first chain 126 is stretched between the lower sides of the first pivot sprocket 121 and first transmission sprocket 123, one end and the other end of the first chain 126 being fixed to the first pivot sprocket 121 and the first transmission sprocket 123, respectively.

The second chain 127 is stretched between the lower side of the second pivot sprocket 122 and the upper side of the second transmission sprocket 124, one end and the other end of the second chain 127 being fixed to the second pivot sprocket 122 and the second transmission sprocket 124, respectively.

The first pivot sprocket 121 and second pivot sprocket 122 are thus linked such as to be rotatable in opposite directions.

The rotation suppression mechanism 140 includes a clutch gear 141 that is a rotation transmission limiter, a lever 142 that is a rotation transmission controller, a solenoid unit 143, a biasing member 144, a lever shaft 145, a bearing 146, a lever stay 147, a plunger 148, and a biasing member support 149.

The clutch gear 141 is secured to the linking shaft 125 to rotate in unison with the linking shaft 125.

The lever stay 147 is fixed to the main body 110. The lever shaft 145 fastens together the lever 142, biasing member 144, and bearing 146 to the lever stay 147.

A torsion spring may be used as the biasing member 144. In this case, a pressing arm extending from one end of the biasing member 144 presses the lever 142, while a supported arm extending from the other end is supported by the biasing member support 149.

Thus the lever 142 can smoothly pivot about the axis of the lever shaft 145, and is always urged by the biasing member 144 about the lever shaft 145.

The lever stay 147 is fixed at a position where the lever 142 faces the clutch gear 141. The lever stay is positioned such that, when the lever 142 pivots about the lever shaft 145, a protruded portion of the lever 142 meshes with a recessed portion of the clutch gear 141.

The solenoid unit 143 that includes the plunger 148 is fixed to the main body 110 at a position where the distal end of the plunger 148 is in contact with one end of the lever 142 in a de-energized state.

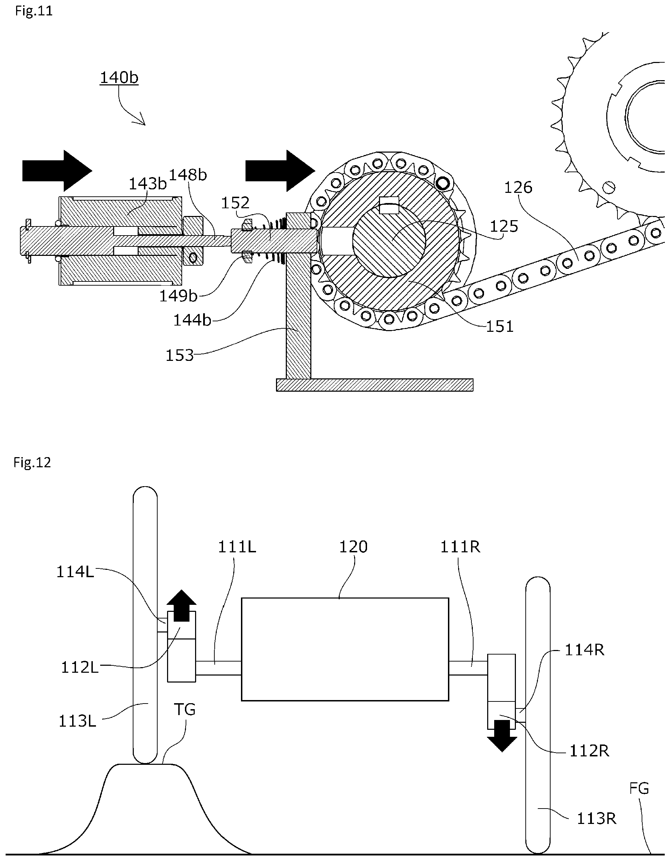

Next, the coordinated movements of the first wheel 113R and second wheel 113L of the running unit 100 according to the first embodiment of the present invention are described with reference to FIG. 12 to FIG. 14.

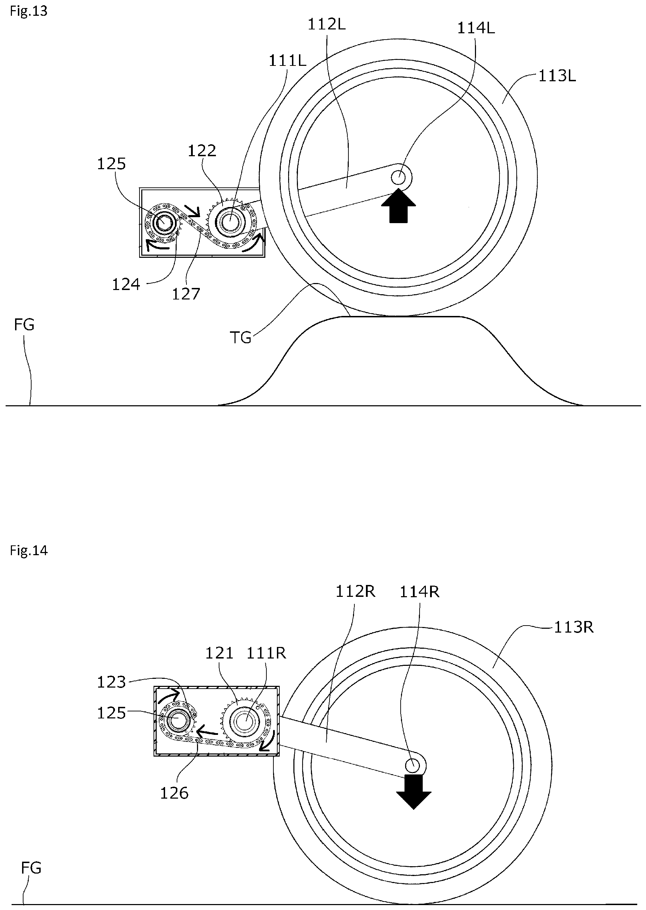

When the second wheel 113L of the running unit 100 running on a flat surface FG rides up onto a raised surface TG as shown in FIG. 13, the second pivot arm 112L swings up about the second pivot shaft 111L.

At this time, the second pivot sprocket 122 connected to the second pivot arm 112L via the second pivot shaft 111L rotates, too. Since the second chain 127 is wound around the second transmission sprocket 124 and second pivot sprocket 122 in opposite directions, the second transmission sprocket 124 rotates reversely from the second pivot sprocket 122.

Since the first transmission sprocket 123 and second transmission sprocket 124 are connected together by the linking shaft 125 that couples together their rotating shafts, the first transmission sprocket 123 rotates in the same direction as the second transmission sprocket 124.

The first chain 126 is wound around the first transmission sprocket 123 and first pivot sprocket 121 in the same direction, so that the first pivot sprocket 121 rotates in the same direction as the first transmission sprocket 123, but in the opposite direction from the second pivot sprocket 122.

This causes the first pivot arm 112R connected to the first pivot sprocket 121 via the first pivot shaft 111R to swing down so that the first wheel 113R makes contact with the flat surface FG.

As the running vehicle further moves and the second wheel 113L comes from the top of the raised surface TG down to the flat surface FG, the force that moves up the second wheel 113L is lost, so that the second wheel 113L starts to swing down with the second pivot arm 112L by the weight of the second wheel 113L.

In the meantime, the first wheel 113R, while maintaining contact with the flat surface FG, swings up with the first pivot arm 112R as viewed from the first pivot shaft 111R, so that the left and right wheels 113 make contact with the flat surface FG with their rotating shafts 114 being positioned on a straight line.

The left and right wheels 113 are linked to swing in opposite directions to each other in this way, so that, even when one wheel 113 rides up onto a step or the like, the other wheel 113 can stay on the ground, without causing the main body 110 to tilt largely. Thus the running stability can be improved.

Needless to say, the first wheel 113R and the second wheel 113L are linked such that the second wheel 113L swings down when the first wheel 113R alone swings up.

Also, when the running vehicle turns a curve, for example, and the vehicle body tilts, the first wheel 113R and second wheel 113L can both stay on the ground, and thus the running stability can be improved.

The sprockets may be partly or entirely toothless on the outer circumference as long as they are able to transmit the tensile force exerted by the open-ended first chain 126 and the second chain 127 wound around and fixedly attached to the sprockets at both ends.

The first chain 126 that is wound around the sprockets in the same direction may be formed as an endless chain and passed around the sprockets.

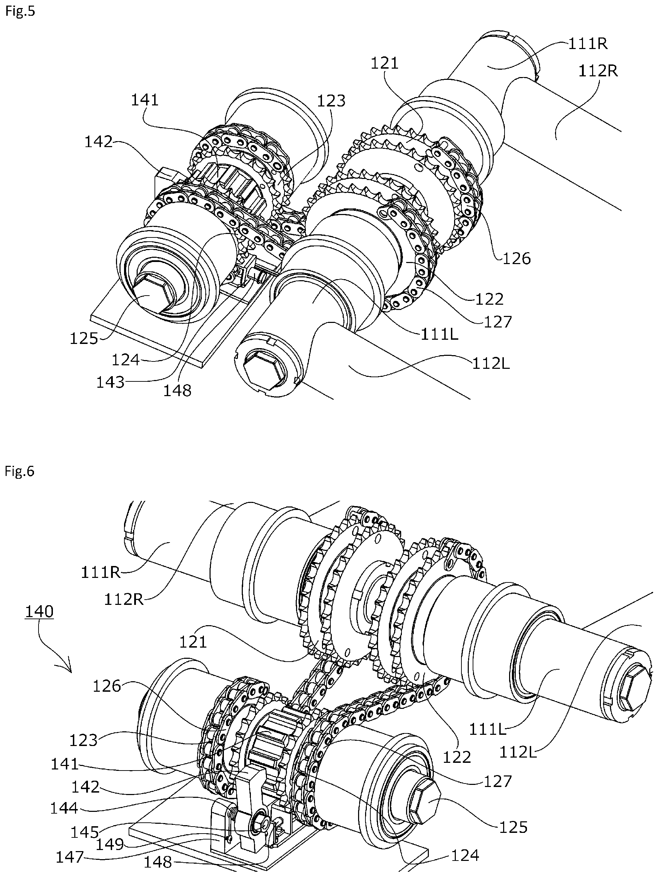

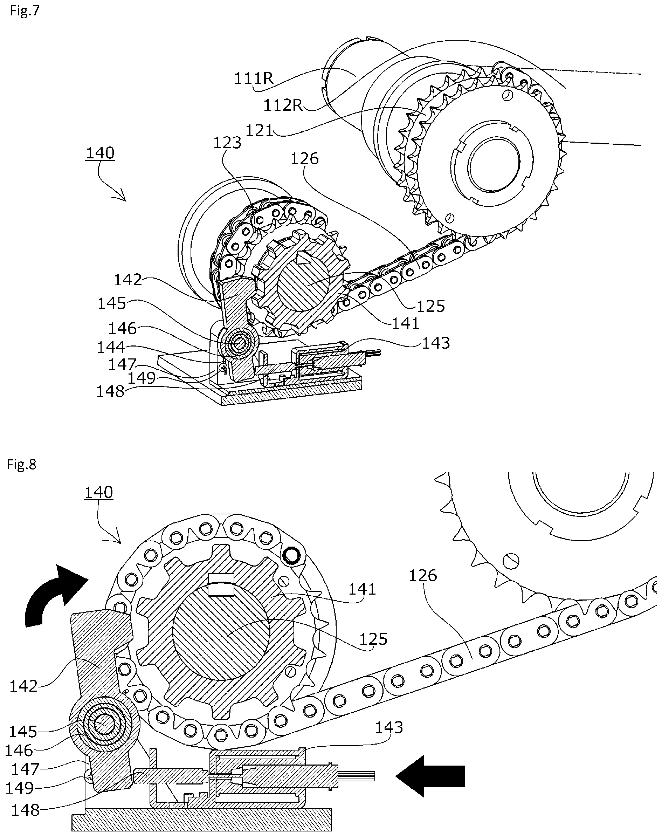

Next, the rotation locking and unlocking actions of the rotation suppression mechanism 140 of the running unit 100 according to the first embodiment of the present invention are described with reference to FIG. 6 to FIG. 8.

When neither the first pivot arm 112R nor the second pivot arm 112L is swung, e.g., when the first wheel 113R and second wheel 113L are both in contact with a flat surface, the biasing member 144 is urging the lever 142 in the unlocking direction so that the lever does not limit the rotation of the linking shaft. Therefore, the left and right wheels can move cooperatively in opposite directions via the linking shaft.

The solenoid unit 143, when de-energized in this state, moves the plunger 148 linearly, causing the distal end of the plunger 148 to abut on the distal end of the lever 142.

When the plunger 148 moves on and overcomes the torque on the lever 142 applied by the biasing member 144 in the unlocking direction, the lever 142 pivots about the lever shaft 145.

This allows a protruded portion of the lever 142 to move into a recessed portion of the clutch gear 141, i.e., the lever 142 locks the clutch gear 141.

In this state, when the linking shaft 125 attempts to rotate as a result of coordinated movements of the left and right wheels, the linking shaft 125 is prevented from rotating, because the clutch gear 141, which is coaxial with and secured to the linking shaft 125, is locked by the lever 142.

This stops the left and right wheels 113 from being able to swing cooperatively in opposite directions to each other. With both wheels being not able to swing, the vehicle body can maintain its balance and stand on its own, for example, when the vehicle comes to a halt.

When the vehicle is running at low speeds, for example, when starting, when it is prone to losing balance, the coordination of wheel movement can be stopped to reduce instability and ensure the stability of the vehicle body. On the other hand, once the vehicle stabilizes at higher speeds, wheel movement coordination can be resumed. In this way, the coordination between the left and right wheels can be adjusted according to the running state or road surface conditions.

Next, the unlocking action of the rotation suppression mechanism 140 is described.

In the state where the linking shaft is prevented from rotating due to the rotation locking action, energizing the solenoid unit 143 draws the plunger 148 back to the solenoid unit 143.

As the plunger is drawn back, the lever 142 that is urged by the biasing member 144 in the unlocking direction pivots about the lever shaft 145 in the unlocking direction, thus unlocking the clutch gear 141.

In this state, when the linking shaft 125 is rotated, there is no interference between the protruded portion of the lever 142 and the recessed portion of the clutch gear 141. The left and right wheels can thus move freely and cooperatively.

The solenoid unit 143 can be switchably energized and de-energized automatically according to the driving speed of the vehicle, or manually by the driver of the vehicle.

The roles of the solenoid unit 143 and the biasing member 144 can be reversed; for example, the biasing member 144 can urge the lever 142 in the direction in which the lever engages with the clutch gear 141. The solenoid unit 143 in this case causes the lever 142 to pivot in the direction in which it disengages from the clutch gear 141.

The lever 142 may have a recessed portion, and the clutch gear 141 may have a protruded portion.

Next, a running unit 100b according to a second embodiment of the present invention is described with reference to the drawings.

Similarly to the first embodiment, other components than the running unit 100b are not illustrated.

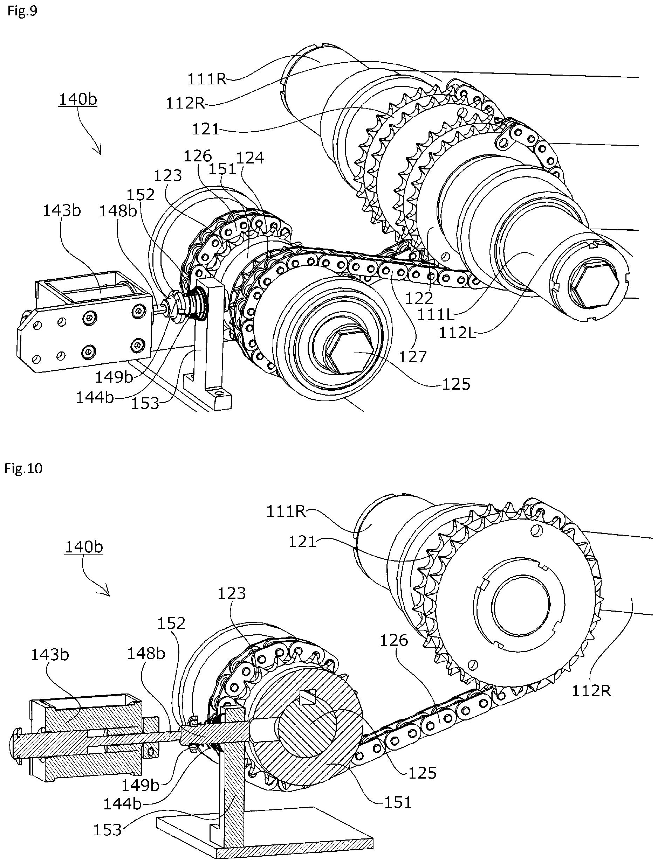

The running unit 100b according to the second embodiment of the present invention includes a rotation suppression mechanism 140b as shown in FIG. 9 to FIG. 11, and is configured similarly to the running unit 100 except for the rotation suppression mechanism 140b.

The rotation suppression mechanism 140b includes a shaft collar 151 that is a rotation transmission limiter, a solenoid unit 143b that is a rotation transmission controller, a biasing member 144b, a plunger 148b, a biasing member support 149b, a pin 152, and a pin stay 153.

The shaft collar 151 is secured to the linking shaft 125 so as to rotate in unison with the linking shaft 125.

The shaft collar 151 is provided with a hole extending from a surface toward the center axis to allow the pin 152 to enter.

The pin stay 153 is fixed to the main body 110, and formed with a hole for the pin 152 to pass through. The pin 152 is passed through the hole in the pin stay 153.

The biasing member 144b has one end fixed to the biasing member support 149b and the other end in contact with the pin stay 153. The pin 152 is positioned inside the biasing member 144b.

The biasing member support 149b is fixed to one end of the biasing member 144b. The pin 152 is pressed into the biasing member support.

The solenoid unit 143b that includes the plunger 148b is fixed to the main body 110 at a position where the distal end of the plunger 148b is in contact with one end of the pin 152 in a de-energized state.

Next, the rotation locking and unlocking actions of the rotation suppression mechanism 140b of the running unit 100b according to the second embodiment of the present invention are described with reference to FIG. 9 to FIG. 11.

When neither the first pivot arm 112R nor the second pivot arm 112L is swung, e.g., when the first wheel 113R and second wheel 113L are both in contact with a flat surface, the biasing member 144b is urging the pin 152 in the unlocking direction so that the pin does not limit the rotation of the linking shaft. Therefore, the left and right wheels can move cooperatively in opposite directions via the linking shaft.

The solenoid unit 143b, when de-energized in this state, moves the plunger 148b linearly, causing the distal end of the plunger 148b to abut on the distal end of the pin 152.

When the plunger 148b moves on and overcomes the biasing force on the pin 152 applied by the biasing member 144b in the unlocking direction, the pin 152 moves linearly.

The pin 152 moves into the hole of the shaft collar 151, thus locking the shaft collar 151.

In this state, when the linking shaft 125 attempts to rotate as a result of coordinated movements of the left and right wheels, the linking shaft 125 is prevented from rotating, because the shaft collar 151, which is coaxial with and secured to the linking shaft 125, is locked by the pin 152.

In this case, the left and right wheels 113 cannot swing cooperatively in opposite directions to each other. The vehicle body can therefore maintain its balance and stand on its own, for example, when the vehicle comes to a halt.

When the vehicle is running at low speeds, for example, when starting, when it is prone to losing balance, the coordination of wheel movement can be stopped to reduce instability and ensure the stability of the vehicle body. On the other hand, once the vehicle stabilizes at higher speeds, wheel movement coordination can be resumed. In this way, the coordination between the left and right wheels can be adjusted according to the running state or road surface conditions.

Next, the unlocking action of the rotation suppression mechanism 140b is described.

In the state where the linking shaft is prevented from rotating due to the rotation locking action, energizing the solenoid unit 143b draws the plunger 148b back to the solenoid unit 143b.

As the plunger is drawn back, the pin 152 that is urged by the biasing member 144b in the unlocking direction via the biasing member support 149b moves linearly to the opposite direction from the shaft collar 151, thus unlocking the shaft collar 151.

In this state, when the linking shaft 125 is rotated, there is no interference between the pin 152 and the hole of the shaft collar 151, so that the left and right wheels can move freely and cooperatively.

Similarly to the first embodiment, the solenoid unit 143b can be switchably energized and de-energized automatically according to the driving speed of the vehicle, or manually by the driver of the vehicle.

The roles of the solenoid unit 143b and the biasing member 144b can be reversed; for example, the biasing member 144b can urge the pin 152 in the direction in which the pin 152 goes into the shaft collar 151. The solenoid unit 143b can be connected to the pin 152 to cause the pin 152 to move linearly to the opposite direction from the shaft collar 151.

The shaft collar 151 may have a recessed portion, and the pin 152 may have a protruded portion.

Next, a running unit 100c according to a third embodiment of the present invention is described with reference to the drawings.

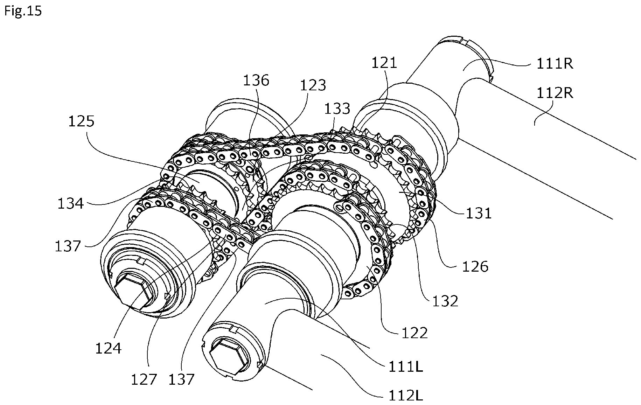

The running unit 100c according to the third embodiment of the present invention includes, as shown in FIG. 15, a third pivot sprocket 131 that is a third pivot rotating element axially adjacent the first pivot sprocket 121 to rotate therewith, a fourth pivot sprocket 132 that is a fourth pivot rotating element axially adjacent the second pivot sprocket 122 to rotate therewith, a third transmission sprocket 133 for transmitting rotation via the third pivot sprocket 131 and a third chain 136 that is a third elongated transmission element, and a fourth transmission sprocket 134 for transmitting rotation via the fourth pivot sprocket 132 and a fourth chain 137 that is a fourth elongated transmission element, in addition to the components similar to the first embodiment.

The rotation suppression mechanism 140 is not illustrated in FIG. 15.

The first transmission sprocket 123, second transmission sprocket 124, third transmission sprocket 133, and fourth transmission sprocket 134 are connected by the linking shaft 125 that couples together their rotating shafts.

Similarly to the first embodiment, the first chain 126 is stretched between the lower sides of the first pivot sprocket 121 and first transmission sprocket 123, one end and the other end of the first chain 126 being fixed to the first pivot sprocket 121 and the first transmission sprocket 123, respectively.

Similarly to the first embodiment, the second chain 127 is stretched between the lower side of the second pivot sprocket 122 and the upper side of the second transmission sprocket 124, one end and the other end of the second chain 127 being fixed to the second pivot sprocket 122 and the second transmission sprocket 124, respectively.

In this embodiment, moreover, the third chain 136 is stretched between the upper sides of the third pivot sprocket 131 and the third transmission sprocket 133, one end and the other end of the third chain 136 being fixed to the third pivot sprocket 131 and the third transmission sprocket 133, respectively.

The fourth chain 137 is stretched between the upper side of the fourth pivot sprocket 132 and the lower side of the fourth transmission sprocket 134, one end and the other end of the fourth chain 137 being fixed to the fourth pivot sprocket 132 and the fourth transmission sprocket 134, respectively.

Thus the third pivot sprocket 131 and fourth pivot sprocket 132 are linked to be rotatable in opposite directions to each other similarly to the first pivot sprocket 121 and second pivot sprocket 122. Therefore, when the main body 100b is picked up so that both wheels 113 (first wheel 113R and second wheel 113L) are lifted up from the ground, the pivot arms 112 (first pivot arm 112R and second pivot arm 112L) can move in opposite directions rather than swinging down together.

The rotation suppression mechanism 140 in the configuration of the running unit 100c according to the third embodiment can be replaced with the rotation suppression mechanism 140b.

While embodiments of the present invention have been described above in detail, the present invention is not limited to the embodiments described above. Various design changes may be made without departing from the scope of the claims set forth in the claims.

The running unit according to the present invention can be used for various types of vehicles that run on wheels, such as engine- or motor-driven vehicles, human-powered bicycles or cargo-carrying carts.

While the wheels of the running unit can serve as rear wheels of a running vehicle as described in the embodiments above, this configuration is not limiting. For example, the running unit can be attached to a running vehicle such as to function as front wheels.

While the elongated transmission element is a chain in the embodiments described above, the elongated transmission element may be a band-like member such as a belt, or a string-like member such as a rope.

As an alternative, rigid components such as rods can be used instead of the elongated transmission elements. The rotating elements can be in the form of a lever.

The solenoid used as the rotation transmission controller in the above-described embodiments can be replaced with other drive means, or the rotation transmission controller can be driven manually. The rotation transmission controller can be configured to be remotely controlled using a drive source, or remotely controlled by hand.

## Claims

1. A running unit comprising:
a main body;
a pivot motion transmission provided to the main body;
a pair of left and right pivot arms provided to the pivot motion transmission so as to be pivotable about a pivot shaft; and
wheels provided to the pivot arms respectively,
the pivot motion transmission including:
a first pivot rotating element that rotates in conjunction with a pivoting movement of one of the pivot arms;
a second pivot rotating element that rotates in conjunction with a pivoting movement of another one of the pivot arms;
a first transmission element that transmits rotation via the first pivot rotating element and a first elongated transmission element; and
a second transmission element that transmits rotation via the second pivot rotating element and a second elongated transmission element,
the first transmission element and the second transmission element having respectively rotating shafts connected together by a linking shaft,
the first pivot rotating element and the second pivot rotating element being linked to be able to rotate in opposite directions to each other,
the running unit further comprising a rotation suppression mechanism configured to suppress rotation movement of the linking shaft.

2. The running unit according to claim 1, wherein
the rotation suppression mechanism includes a rotation transmission limiter that is coaxial with, and configured to rotate integrally with the linking shaft, and a rotation transmission controller configured to control rotation of the rotation transmission limiter, and
the rotation transmission limiter and the rotation transmission controller are configured to be able to lock with each other.

3. The running unit according to claim 2, wherein
the rotation transmission limiter includes on an outer circumferential surface thereof a recessed portion, and
the rotation transmission controller includes a lever having a protruded portion configured to be able to move into the recessed portion.

4. The running unit according to claim 2, wherein
the rotation transmission limiter includes on an outer circumferential surface thereof a hole, and
the rotation transmission controller includes a pin configured to be able to move into the hole.

5. The running unit according to claim 2, wherein the rotation transmission controller includes a solenoid unit and a biasing member.

6. The running unit according to claim 1, wherein the first elongated transmission element is a chain having ends, one end of the ends being connected to the first pivot rotating element and another end of the ends being connected to the first transmission element, and
the second elongated transmission element is a chain having ends, one end of the ends being connected to the second pivot rotating element and another end of the ends being connected to the second transmission element.

7. The running unit according to claim 1, wherein
the pivot motion transmission includes:
a third pivot rotating element axially adjacent to the first pivot rotating element and rotating integrally therewith;
a fourth pivot rotating element axially adjacent to the second pivot rotating element and rotating integrally therewith;
a third transmission element that transmits rotation via the third pivot rotating element and a third elongated transmission element; and
a fourth transmission element that transmits rotation via the fourth pivot rotating element and a fourth elongated transmission element,
the third transmission element and the fourth transmission element are connected together by a linking shaft,
the third elongated transmission element is configured to transmit rotation by tension in an opposite direction to tension applied by the first elongated transmission element, and
the fourth elongated transmission element is configured to transmit rotation by tension in an opposite direction to tension applied by the second elongated transmission element.

8. The running unit according to claim 7, wherein
the third elongated transmission element is a chain having ends, one end of the ends being connected to the third pivot rotating element and another end of the ends being connected to the third transmission element, and
the fourth elongated transmission element is a chain having ends, one end of the ends being connected to the fourth pivot rotating element and another end of the ends being connected to the fourth transmission element.

9. A running vehicle comprising:
a vehicle body;
a front running part having a wheel; and
a rear running part having a wheel,
at least one of the front running part and the rear running part being configured by the running unit according to any of claims 1 to 8.
